# EUROPÄISCHE PATENTSCHRIFT

(11) **EP 4 078 542 B1**
(45) Veröffentlichungstag und Bekanntmachung des Hinweises auf die Patenterteilung: **23.04.2025**
(21) Anmeldenummer: 20815814.7
(22) Anmeldetag: 01.12.2020
(51) Int. Cl.: G07C 9/00, H04M 11/02, H04W 12/06

(54) **VERFAHREN ZUM ÜBERMITTELN VON PERSONALISIERTER INFORMATION AN EINEN NUTZER EINES GEBÄUDES**
METHOD FOR TRANSMITTING PERSONALIZED INFORMATION TO A USER OF A BUILDING
PROCÉDÉ DE TRANSMISSION D'INFORMATIONS PERSONNALISÉES À UN UTILISATEUR D'UN BÂTIMENT

(30) Priorität: 20.12.2019 EP 19218505
(43) Veröffentlichungstag der Anmeldung: 26.10.2022
(73) Patentinhaber: INVENTIO AG, 6052 Hergiswil (CH)
(72) Erfinder: TRÖSCH, Florian, 8703 Erlenbach ZH (CH)
(74) Vertreter: Inventio AG
(86) Internationale Anmeldenummer: PCT/EP2020/084079
(87) Internationale Veröffentlichungsnummer: WO 2021/121958

(56) Entgegenhaltungen:
- EP-A1- 2 835 788
- EP-A1- 3 409 630
- WO-A1-2016/087478
- WO-A2-2018/199771

## Beschreibung

### Beschreibung

Die hier beschriebene Technologie betrifft allgemein ein Gebäudesystem, das in oder für ein Gebäude einen oder mehrere Dienste ausführt. Ausführungsbeispiele der Technologie betreffen insbesondere ein Gebäudesystem, das einen Kommunikationsdienst zwischen einem Bewohner des Gebäudes und einem Besucher des Gebäudes ausführt und ein Verfahren zum Betreiben eines solchen Gebäudesystems.

Der Zugang zu Gebäuden wie etwa Bürogebäuden und Wohngebäuden ist häufig eingeschränkt und die Eingangstüren sind verriegelt, sodass Besucher das Gebäude nicht betreten können, ohne die Erlaubnis oder Berechtigung eines Bewohners des Gebäudes erhalten zu haben. Der Besucher klingelt normalerweise an der Tür des Bewohners, den er besuchen möchte, um um Zugang zu bitten. Zu diesem Zweck befinden sich neben einem Eingang des Gebäudes Ausstattungen wie etwa Namensschilder, zusammen mit ihnen zugeordneten Klingelknöpfen, die es dem Besucher ermöglichen, zu bestimmen, wer ein Bewohner des Gebäudes ist, und den Bewohner darauf aufmerksam zu machen, dass ein Besucher an dem Eingang wartet. Der aufmerksam gemachte Bewohner wird dann typischerweise mittels eines innerhalb des Gebäudes installierten Gegensprechanlagensystems den Kontakt zu dem Besucher herstellen. Sobald der Bewohner die Identität des Besuchers festgestellt hat, kann er durch Entriegeln der Eingangstür Zugang in das Gebäude bereitstellen. Normalerweise kann der Bewohner die Eingangstür aus der Ferne über das Gegensprechanlagensystem entriegeln. Ein Nachteil der derzeit erforderlichen Ausstattungen (z. B. Namensschilder, Klingelknöpfe und Gegensprechanlagensystem) sind die Kosten, die deren Installation und Wartung mit sich bringen. Darüber hinaus erfordern sie normalerweise eine spezielle Verkabelung innerhalb des Gebäudes und erlegen der Gestaltung des Gebäudes gewisse Einschränkungen auf (da an dem Eingang besonders bei großen Gebäuden mit vielen Bewohnern erheblicher Platz nötig ist). Außerdem müssen die Namensschilder auf dem neuesten Stand gehalten werden, wenn sich die Bewohner ändern.

WO 2016/087478 A1 offenbart ein System, bei dem ein Mobilfunkgerät eines Besuchers per Funk Eingangsidentifikationsinformation von einer Funkeinrichtung empfängt, wenn er sich in unmittelbarer Nähe eines Gebäudeeingangs befindet. Das Mobilfunkgerät sendet die Eingangsidentifikationsinformation an einen Remote-Server, der basierend auf der Eingangsidentifikationsinformation eine Liste der Bewohner des Gebäudes ermittelt und diese zum Mobilfunkgerät sendet. Der Besucher kann aus der Liste die gewünschten Bewohner auswählen und kontaktieren.

Das aus WO 2016/087478 A1 bekannte System vermeidet die oben gennannten Nachteile. Je nach Gebäude und Anwendung können durch die benötigten Funkeinrichtungen relative hohe Kosten entstehen. Es besteht daher Bedarf an einem Gebäudesystem, das kostengünstiger herzustellen und zu betreiben ist.

Ein weiteres Gebäudezugangssystem nach dem Stand der Technik ist aus WO-A-2018/199771 bekannt.

Ein Aspekt einer solchen Technologie betrifft ein Verfahren zum Betreiben eines Gebäudesystems für eine Übermittlung von personalisierter Information an einen Besucher eines Gebäudes. Für das Gebäude ist eine Servereinrichtung vorhanden, die eine Prozessoreinrichtung und eine kommunikativ mit der Prozessoreinrichtung verbundene Speichereinrichtung hat, Daten speichert, die für eine Ermittlung von für Besucher (2) vorbestimmte Anzeigeinformationen vorgesehen sind. Ein dem Gebäude zugeordneter optischer Code ist von einem Mobilfunkgerät eines Besuchers lesbar, während sich der Besucher ausserhalb des Gebäudes oder in einer öffentlichen Zone innerhalb des Gebäudes aufhält. Gemäss dem Verfahren wird ein erstes Datensignal durch die Prozessoreinrichtung empfangen, wobei das erste Datensignal eine Gebäudekennung umfasst, die sich aus dem optischen Code ergibt, wenn er vom Mobilfunkgerät des Besuchers gelesen und zur Prozessoreinrichtung übermittelt wird. Die Gebäudekennung gibt das Gebäude an, an dem sich der Besucher befindet, um einen Bewohner zu kontaktieren. Durch die Prozessoreinrichtung wird ermittelt, ob mit dem oder in Verbindung mit dem ersten Datensignal eine dem Besucher zugeordnete erste Kennung empfangen wird, wobei es sich bei Empfang der erste Kennung um einen bekannten Besucher handelt, andernfalls um einen unbekannten Besucher. Bei Empfang der ersten Kennung wird die Speichereinrichtung durch die Prozessoreinrichtung nach einer für das durch die Gebäudekennung angegebene Gebäude gespeicherten Kennung durchsucht, die gleich der ersten Kennung ist. Bei erfolgreichem Durchsuchen wird durch die Prozessoreinrichtung aus den Daten und mittels der ersten Kennung, die für den Besucher vorbestimmte Anzeigeinformation ermittelt. Ein zweites Datensignal wird von der Servereinrichtung zum Mobilfunkgerät des Besuchers gesendet, wobei das zweite Datensignal die für den Besucher vorbestimmte Anzeigeinformation umfasst und das Mobilfunkgerät veranlasst, die Anzeigeinformation auf einem Bildschirm des Mobilfunkgeräts anzuzeigen. Bei nicht erfolgreichem Durchsuchen wird ein drittes Datensignal von der Prozessoreinrichtung erzeugt und zum Mobilfunkgerät gesendet. Das dritte Datensignal umfasst eine vom Besucher unabhängige Anzeigeinformation und veranlasst das Mobilfunkgerät, die vom Besucher unabhängige Anzeigeinformation auf dem Bildschirm des Mobilfunkgeräts anzuzeigen.

Ein anderer Aspekt der Technologie betrifft ein Gebäudekommunikationssystem für ein Gebäude, an dem ein optischer Code so angeordnet ist, dass er von einem Mobilfunkgerät eines Besuchers lesbar ist, während sich der Besucher ausserhalb des Gebäudes oder in einer öffentlichen Zone innerhalb des Gebäudes aufhält. Das Gebäudekommunikationssystem umfasst eine Servereinrichtung, die eine Prozessoreinrichtung und eine kommunikativ mit der Prozessoreinrichtung verbundene Speichereinrichtung hat. Die Speichereinrichtung speichert Daten, die für eine Ermittlung von für Besucher vorbestimmte Anzeigeinformationen vorgesehen sind. Die Prozessoreinrichtung ist ausgestaltet, ein eines ersten Datensignals zu empfangen, wobei das erste Datensignal eine Gebäudekennung umfasst, die sich aus dem optischen Code ergibt, wenn er vom Mobilfunkgerät des Besuchers gelesen und zur Prozessoreinrichtung übermittelt wird. Die Gebäudekennung gibt das Gebäude an, an dem sich der Besucher befindet, um einen Bewohner zu kontaktieren. Die Prozessoreinrichtung ist ausgestaltet, zu ermitteln, ob mit dem oder in Verbindung mit dem ersten Datensignal eine dem Besucher zugeordnete erste Kennung empfangen wird, wobei es sich bei Empfang der ersten Kennung um einen bekannten Besucher handelt, andernfalls um einen unbekannten Besucher. Die Prozessoreinrichtung ist zudem ausgestaltet, die Speichereinrichtung, bei Empfang der ersten Kennung, nach einer für das durch die Gebäudekennung angegebene Gebäude gespeicherten Kennung zu durchsuchen, die gleich der ersten Kennung ist. Wenn das Durchsuchen erfolgreich ist, ermittelt die Prozessoreinrichtung aus den Daten und mittels der ersten Kennung die für den Besucher vorbestimmte Anzeigeinformation. Die Prozessoreinrichtung ist ausserdem ausgestaltet, ein zweites Datensignals von der Servereinrichtung zum Mobilfunkgerät des Besuchers zu senden, wobei das zweite Datensignal die für den Besucher vorbestimmte Anzeigeinformation umfasst und das Mobilfunkgerät veranlasst, die Anzeigeinformation auf einem Bildschirm des Mobilfunkgeräts anzuzeigen. Wenn das Durchsuchen nicht erfolgreich ist, erzeugt die Prozessoreinrichtung ein drittes Datensignal zu und sendet es zum Mobilfunkgerät. Das dritte Datensignal umfasst eine vom Besucher unabhängige Anzeigeinformation und veranlasst das Mobilfunkgerät, die vom Besucher unabhängige Anzeigeinformation auf dem Bildschirm des Mobilfunkgeräts anzuzeigen.

Die hier beschriebene Technologie schafft ein Gebäudekommunikationssystem, bei dem zum einen weder eine Notwendigkeit für Namensschilder und Klingelknöpfe am Gebäudeeingang des Gebäudes noch eine Notwendigkeit zum Installieren eines Gegensprechanlagensystems in dem Gebäude besteht. Der Besucher verwendet sein eigenes Mobilfunkgerät, um einen Bewohner im Gebäude zu kontaktieren; dazu ist der Besucher gehalten, anfangs einen optischen Code mit dem Mobilfunkgerät zu scannen. Am Gebäudeeingang kann aber in Verbindung mit einem Zugangskontrollsystem eine elektronische Schliesseinrichtung vorgesehen sein, um dem Besucher nach Autorisierung durch einen Bewohner Zutritt zu gewähren, beispielsweise durch ein automatisches Entriegeln oder Freigeben einer Tür, eines Tors oder eines mechanischen oder optischen Drehkreuzes.

Zum anderen schafft die beschriebene Technologie ein Gebäudekommunikationssystem, bei dem die Information, die dem Besucher als Reaktion auf den gescannten optischen Code auf dem Bildschirm seines Mobilfunkgeräts angezeigt wird, davon abhängt, wer der Besucher ist bzw. in welcher Funktion er den Bewohner kontaktieren möchte. Ein Besucher, der im System bekannt ist, weil er dort z. B. registriert, angemeldet oder regelmässig im Gebäude ist, bekommt auf dem Bildschirm seines Mobilfunkgeräts andere Anzeigeinformation angezeigt, als ein unbekannter Besucher. Ein unbekannter Besucher bekommt beispielsweise nur eine öffentliche Mitteilung angezeigt, z. B. dass für weitere Information die angezeigte Gebäudefunktion "Empfang/Reception" zu wählen ist. Einem bekannten Besucher kann dagegen detailliertere u. U. auch nicht öffentliche Information angezeigt werden, beispielsweise Namen und Adressen (z. B. Stockwerk und/oder Wohnungsnummer im Gebäude), eine Begrüssungsnotiz (z. B. "Willkommen bei ABC" oder "Willkommen "Name des Besuchers"), eine Erreichbarkeits- oder Abwesenheitsnotiz (z. B. eine Meldung "Bin gleich zurück", "Bin ab 18:00 wieder da" oder "Bitte nicht stören") oder eine Umzugsinformation mit Angaben zur neuen Adresse. Je bekannter bzw. vertrauter der Besucher ist, desto mehr nicht öffentliche Information kann ihm übermittelt werden. Diese Art der Information wird von einem Server, d. h. von einer zentralen Quelle, bereitgestellt wird; sie kann vom Bewohner zentral definiert und bei Bedarf geändert werden.

Ein unbekannter Besucher wird in einem Ausführungsbeispiel dadurch erkannt, dass die Prozessoreinrichtung beim Durchsuchen der Speichereinrichtung keine gespeicherte Kennung ermittelt, die gleich der ersten Kennung ist. Die Prozessoreinrichtung erzeugt daraufhin ein drittes Datensignal, das zum Mobilfunkgerät gesendet wird. Das dritte Datensignal umfasst eine vom Besucher unabhängige Anzeigeinformation und veranlasst das Mobilfunkgerät, die vom Besucher unabhängige Anzeigeinformation auf dem Bildschirm des Mobilfunkgeräts anzuzeigen. Dabei wird die genannte öffentliche Mitteilung angezeigt.

In einem Ausführungsbeispiel umfasst der optische Code einen QR Code (Quick Response Code). Der QR Code codiert beispielsweise eine Webadresse. In einem Ausführungsbeispiel ist der QR Code auf ein Trägermaterial gedruckt, das am Gebäude an einer für Besucher zugänglichen Stelle befestigt wird (z. B. mittels Kleben). Derart anbringbare Trägermaterialien sind kostengünstig und können schnell und relativ flexibel bzgl. des Orts angeordnet werden. Der Fachmann erkennt, dass alternativ zu einem gedruckten QR Code eine elektronische Anzeigeeinheit verwendet werden kann, die auf ihrem Bildschirm (z. B. ein LCD Display) einen statischen oder dynamischen QR Code anzeigt; der angezeigte optische Code kann auch ein Farbcode sein. Zudem erkennt der Fachmann, dass der optische Code einen gedruckten oder elektronisch angezeigten Strichcode (Barcode) umfassen kann. Der Strichcode codiert z. B. einen numerischen Code, der in einer Datenbank einem bestimmten Gebäude zugeordnet ist. Der optische Code, mit einem QR Code, einem Barcode oder einem anderen optischen Code, ist zudem platzsparend anzubringen.

In einem Ausführungsbeispiel kann der optische Code behindertengerecht ausgestaltet sein. Das genannte Trägermaterial kann beispielsweise mit einer Markierung versehen sein, die mit dem Tastsinn wahrnehmbar ist. Ein Besucher mit eingeschränkter Sehfähigkeit kann den Ort des optischen Codes daher ertasten und ihn dann mit dem ihm typischerweise vertrauten Mobilfunkgerät scannen. Die Markierung kann z. B. Angaben in Braille Schrift umfassen. Zusätzlich oder alternativ dazu kann der Ort des optischen Codes einem solchen Benutzer akustisch angezeigt werden, z. B. durch einen Summer oder einer anderen punktuellen akustischen Signalquelle. Der Summer bzw. die akustische Signalquelle kann am Ort des Trägermaterials oder in dessen unmittelbarer Nähe angeordnet sein. In einer elektronischen Anzeigeeinheit kann der Summer bzw. die akustische Signalquelle in der Anzeigeeinheit angeordnet sein. Die akustische Signalquelle kann beispielsweise bei Annäherung des Besuchers eine Sprachmitteilung zur Nutzung des optischen Codes erzeugen.

Gemäss der hier beschriebenen Technologie kann durch die Prozessoreinrichtung eine Kommunikationsverbindung zwischen dem Mobilfunkgerät des Besuchers und einem Kommunikationsgerät des zu kontaktierenden Bewohners hergestellt werden. Information über den zu kontaktierenden Bewohner ist in der für den Besucher vorbestimmten Anzeigeinformation enthalten; sie kann einen Namen des Bewohners und/oder dessen Funktion umfassen.

Ein Bewohner (oder Besitzer) ist eine Person, die in dem Gebäude arbeitet oder lebt und auf eine Kontaktanfrage (z. B. einem Anruf) eines Besuchers reagieren kann, wenn sich dieser am Gebäude befindet. Die Reaktion kann darin bestehen, dass der Bewohner die Kontaktanfrage zulässt und mit dem Besucher per Telekommunikation redet und/oder ihm Zugang in das Gebäude gewährt. Andererseits ist ein Besucher eine Person, die einen Bewohner kontaktieren möchte, um z. B. Zugang in das Gebäude zu bekommen.

**In** einer Ausführungsbeispiel wird das Herstellen der Verbindung zwischen dem Mobilfunkgerät und dem Kommunikationsgerät somit durch den Webserver gesteuert und insbesondere wird das Bereitstellen von Kontaktinformationen des Besuchers und/oder des Bewohners, wie etwa einer Telefonnummer oder eines Benutzernamens, an den Besucher und/oder den Bewohner explizit ausgeschlossen. Auf diese Weise kann der Austausch persönlicher Informationen verhindert werden, was beispielsweise bei Verwenden eines Standard-Sprachanrufs, bei dem der Initiator des Anrufs beispielsweise die Mobiltelefonnummer des Empfängers erfordert, nicht der Fall wäre.

**In** einem Ausführungsbeispiel kann das Gebäudekommunikationssystem so ausgestaltet sein, dass der Besucher tatsächlich am Gebäude anwesend sein muss, wenn eine Kontaktaufnahme mit einem Bewohner 6 gewünscht ist. Dafür kann in einem Ausführungsbeispiel am oder in der Nähe des Gebäudes eine Einrichtung angeordnet sein, die zur Standortverifizierung dient. Diese Einrichtung kann beispielsweise einen Bakensender (auch als Beacon bezeichnet) mit festgelegter Reichweite (insbesondere einer relativ geringen Reichweite von weniger als ca. 5 m) umfassen, z. B. eine energiearme Bluetooth (BLE)-Vorrichtung. Alternativ dazu kann die Einrichtung eine Funkeinrichtung für Nahbereichkommunikation (NFC) umfassen. Darüber hinaus kann die Einrichtung auch Teil eines drahtlosen lokalen Netzwerks (wireless local area network, WLAN) sein. Wenn am Gebäude keine derartige Einrichtung vorgesehen ist, können vom Mobilfunkgerät abgeleitete Positions- oder Standortinformationen (z. B. mittels GPS) verwendet werden. Ein Mobilfunkgerät, das seinen Standort ermitteln kann, kann so eingestellt sein, dass der ermittelte Standort immer genutzt werden darf oder dass der Benutzer jedes Mal anzufragen ist, ob der Standort verwendet werden darf. Diese Beispiele machen deutlich, dass zur Standortverifizierung mehrere Möglichkeiten bestehen, die je nach Gebäude und dortiger Gegebenheiten flexibel gewählt werden können.

Die so ermittelten Ortsdaten geben einen Ort an, an dem sich das Mobilfunkgerät befindet, insbesondere im Wesentlichen zum Zeitpunkt des Empfangs des ersten Datensignals. Mittels der empfangenen Ortsdaten kann die Prozessoreinrichtung ermitteln, ob sich der durch die Ortsdaten angegebene Ort am Gebäude befindet. Ist dies der Fall, befindet sich auch der Besucher am Gebäude. Ist dies dagegen nicht der Fall, kann die Prozessoreinrichtung das Herstellen der Kommunikationsverbindung unterbinden. Je nach Ausgestaltung des Gebäudekommunikationssystem kann die Prozessoreinrichtung in einem Ausführungsbeispiel eine Nachricht zum Mobilfunkgerät senden, um den Besucher über den Grund für das Unterbleiben der Kommunikationsverbindung zu informieren.

In einem Ausführungsbeispiel umfasst das Verfahren ferner das Senden von Informationen, die sich auf den Besucher beziehen, an den Webserver. Solche Informationen können ein persönliches Benutzerprofil des Besuchers umfassen. Diese Informationen können zum Beispiel verwendet werden, um den Besucher (gültig) zu identifizieren und dem Besucher dann individuell angepasste oder personalisierte Informationen bereitzustellen, z. B. eine Begrüssungsnachricht oder u. U. einen Zugangscode.

In einem weiteren Ausführungsbeispiel umfasst das Herstellen der Verbindung zwischen dem Mobilfunkgerät des Besuchers und dem Kommunikationsgerät des Bewohners das Herstellen einer Voice-over-IP(VOIP)-Verbindung zwischen diesen Geräten, insbesondere einer Audioverbindung oder einer Videoverbindung. Dies ermöglicht es dem Bewohner, mit dem Besucher mindestens auf die gleiche Weise zu kommunizieren, wie bei Verwendung eines üblichen integrierten Gegensprechanlagensystems, ohne die Notwendigkeit, ein derart kostspieliges System installieren zu müssen.

In einen Ausführungsbeispiel kann das Herstellen der Verbindung zwischen diesen Geräten das Senden einer Nachricht vom Mobilfunkgerät an das Kommunikationsgerät des Bewohners über den Webserver umfassen. Die durch den Webserver empfangene Nachricht vom Mobilfunkgerät wird dadurch an das Kommunikationsgerät. Dementsprechend kann eine Antwortnachricht vom Kommunikationsgerät an den Webserver gesendet werden, der dann die Antwortnachricht an das Mobilfunkgerät. Auf diese Weise wird eine Sofortnachricht- oder Chat-Funktion bereitgestellt, die es dem Besucher und dem Bewohner ermöglicht, Textnachrichten auszutauschen. Der Vorteil des Benutzens eines solchen Push-Mechanismus besteht darin, dass es weder für den Initiator noch den Empfänger erforderlich ist, z. B. einen Benutzernamen oder andere Anmeldeinformationen der anderen Partei zu kennen.

In einer weiteren Ausführungsform des Verfahrens wird das Herstellen der Verbindung zwischen dem Mobilfunkgerät und dem Kommunikationsgerät mindestens teilweise über ein Mobil-/Mobilfunknetz erreicht, wie etwa ein Universal Mobile Telecommunications System (UMTS, 3G-Standard) oder ein Long-Term-Evolution (LTE, 4G-Standard)-Netzwerk.

Bei der hier beschriebenen Technologie ist es auch ein Vorteil, dass die Privatsphäre eines Bewohners besser geschützt ist. Anstatt seinen Namen auf einem Namensschild am Gebäude anzubringen oder seinen Namen in einer elektronischen Liste anzugeben, die an jeden Besucher übermittelt wird, der sich am Gebäudeeingang meldet, wird dies bei der hier beschriebenen Technologie vermieden. Damit werden beispielsweise die Namen der Bewohner nicht beliebig preisgegeben, sondern personalisiert bezogen auf den Besucher.

In einer weiteren Ausführungsform ist das Kommunikationsgerät eine Vorrichtung eines Dritten, der nicht der Bewohner ist, z. B. eines Stellvertreters, wie etwa eines Beauftragten, einer Empfangsperson, eines Hausmeisters, eines Call-Centers oder eines Sicherheits- oder Rettungsdienstes, der/die sich insbesondere an einem verschiedenen Ort als einem Büro oder einer Wohnung des Bewohners befindet/n. Auf diese Weise ist es dem Bewohner möglich, das Bereitstellen von Information für den Besucher an einen Stellvertreter zu delegieren, falls der Bewohner nicht im Gebäude anwesend ist oder beschäftigt ist und sich nicht sofort mit der Anfrage eines Besuchers befassen kann.

In einem Ausführungsbeispiel erfolgt das Senden des zweiten Datensignals durch den Webserver zum Mobilfunkgerät des Besuchers mittels dem Senden von Daten und/oder eines Skripts wie etwa HTML, JavaScript, CSS oder Adobe Flash an einen Client, insbesondere einen Thin Client wie etwa einen Webbrowser, der durch das Mobilfunkgerät als eine Webanwendung ausgeführt wird;

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung eines Anwendungsbeispiels eines Gebäudekommunikationssystems in Verbindung mit einer beispielhaften Situation an einem Gebäude; und
- Fig. 2: ein Ablaufdiagram eines Ausführungsbeispiels eines Verfahrens zum Betreiben des Gebäudekommunikationssystems.

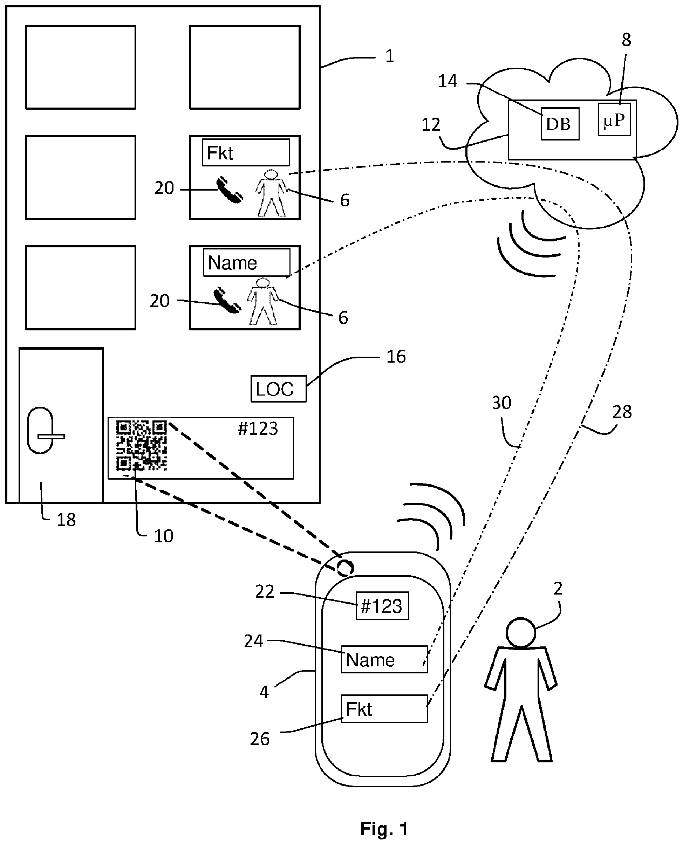

Fig. 1 ist eine schematische Darstellung eines Anwendungsbeispiels eines Gebäudekommunikationssystems in Verbindung mit einer beispielhaften Situation an einem Gebäude 1. Das Gebäude 1 kann ein Geschäftsgebäude mit Büros und/oder anderen Geschäftsräumen oder ein Wohnhaus mit mehreren Wohnungen/Apartments sein. Der Fachmann erkennt dabei, dass die hier beschriebene Technologie nicht auf ein einziges Gebäude 1 beschränkt ist. Personen, die sich im Gebäude 1 aufhalten, weil sie dort arbeiten oder wohnen, sind in dieser Beschreibung als Bewohner 6 bezeichnet. Die Bewohnen 6 können durch ihre Namen (Name(s)) und/oder ihre Funktionen (Fkt(s)) (z. B. Gebäudeverwaltung, Gebäudereinigung etc.) charakterisiert sein. Vor dem Gebäude 1 befindet sich in Fig. 1 eine Person 2, die einen Bewohner 6 kontaktieren und/oder Zugang zum Gebäude 1 möchte. Die Person 2, die sich vor dem Gebäude 1 befindet, ist in dieser Beschreibung als Besucher 2 bezeichnet; dabei kann es sich um einen erstmaligen oder regelmässigen Besucher 2 handeln oder um einen Besucher 2, der zum wiederholten Mal das Gebäude 1 aufsucht. Der Besucher 2 kann auch im Gebäude 1 arbeiten oder wohnen und trotzdem den Wunsch haben, einen Bewohner 6 zu kontaktieren, z. B. einen Arbeitskollegen oder ein Familienmitglied.

Wie in Fig. 1 angedeutet, stehen dem Besucher 2 und den Bewohnern 6 Kommunikationsgeräte (4, 20) zur Verfügung. Der Besucher 2 führt ein Mobilfunkgerät 4 mit sich, das beispielsweise ein Mobiltelefon, ein Smartphone oder ein Tablet PC sein kann. Diese Geräte sind üblicherweise mit Hardware, Software und Firmware ausgestattet, um beispielsweise eine Kommunikationsfunktion, eine digitale Bild- und Videofunktion und ein graphisches Nutzerinterface (auch als Graphical User Interface, GUI, bezeichnet) zur Verfügung zu stellen. Die Kommunikationsfunktion ermöglicht eine Kommunikation über ein lokales Funknetz (WLAN/WiFi) und/oder ein globales Mobilfunknetz gemäss einem Mobilfunkstandard (z. B. GSM, LTE, G4, G5). Die digitale Bild- und Videofunktion kann auch genutzt werden, um einen optischen/visuellen Code 10 zu scannen. Je nach Ausgestaltung des Mobilfunkgeräts 4 kann es z. B. anwendungsspezifische Software (sogenannte Apps) aufweisen.

In Fig. 1 ist ein optischer Code 10 beispielhaft in Form eines QR Codes gezeigt. Weitere Beispiele eines optischen Codes 10 und Details zu QR Codes sind an anderer Stelle dieser Beschreibung angegeben. Im gezeigten Ausführungsbeispiel ist der optische Code 10 am Gebäude 1 angeordnet, so dass er vom Besucher 2, der sich in der gezeigten Situation ausserhalb des Gebäudes 1 aufhält, wahrgenommen werden kann. Der optische Code 10 kann z. B. aussen am Gebäude 1 angeordnet sein, beispielsweise an einer Gebäudeaussenwand in Verbindung mit einer Hausnummer (#123) in der Nähe eines Gebäudeeingangs 18 oder an einer Gebäudetür. Dort kann auch ein Hinweisschild angeordnet sein, das den Besucher 2 darauf hinweist, dass der optische Code 10 zu scannen ist, um einen Bewohner 6 zu kontaktieren. In Fig. 1 ist angedeutet, dass der Besucher 2 das Mobilfunktelefon 4 so an den optischen Code 10 hält, dass es den optischen Code 10 scannen und lesen kann. D. h. das Mobilfunkgerät 4 führt eine Softwareanwendung aus, die die im optischen Code 10 codierte Information ermittelt. Bei einem QR Code umfasst die codierte Information üblicherweise eine Webadresse (URL).

Fig. 1 zeigt ausserdem eine Speichereinrichtung 14, in der ein Datenbanksystem (DB) implementiert ist, und einen damit kommunikativ verbundenen Prozessor 8 (µP), der für Steuer- und Verarbeitungsfunktionen vorgesehen ist. Die Speichereinrichtung 14 und der Prozessor 8 sind in einem Ausführungsbeispiel entfernt vom Gebäude 1 angeordnet und zu einem Webserver 12 zusammengefasst. Der Webserver 12 stellt eine über das Internet verfügbar gemachte IT-Infrastruktur (auch als "Cloud Computing" bezeichnet) dar. Die kommunikative Verbindung zwischen dem Webserver 12, dem Mobilfunkgerät 4 und den Kommunikationsgeräten 20 der Bewohner 6 erfolgt über ein Kommunikationsnetzwerk, beispielsweise ein Mobilfunknetz.

Die Speichereinrichtung 14 umfasst je nach Speicherbedarf beispielsweise ein Festplattenlaufwerk (HDD), ein CD/DVD-Laufwerk, ein Halbleiterlaufwerk/Solid-State-Disk (SSD) oder Kombinationen davon, oder andere Speichereinrichtungen für digitale Daten. Das Datenbanksystem besteht aus zwei Teilen: einer Verwaltungssoftware, genannt Datenbankmanagementsystem, und einer Menge von zu verwaltenden Daten. Die Verwaltungssoftware organisiert intern die strukturierte Speicherung der Daten und kontrolliert alle lesenden und schreibenden Zugriffe auf die Datenbank. In einem Ausführungsbeispiel ist das Datenbanksystem ein relationales Datenbanksystem. Zur Abfrage und Verwaltung der Daten bietet ein Datenbanksystem eine Datenbanksprache an, bei einem relationalen Datenbanksystem z. B. die Sprache SQL.

Das Datenbanksystem speichert für das Gebäude 1 und jedes weitere evtl. noch vorhandene Gebäude einen oder mehrere Datensätze. Die gespeicherten Daten können beispielsweise nach Angaben zu den Bewohnern 6 des Gebäudes 1 organisiert sein, z. B. in einem Datensatz gespeichert sein. Zu diesen Angaben können gehören: persönliche Daten der Bewohner 2, z. B. Name, Funktion (Bewohner, Mitarbeiter einer Firma), Telefonnummer(n), E-Mail Adresse(n), soziale Medieninformation, Zugangsberechtigungen (z. B. keine Beschränkungen oder bestimmte Räume und Stockwerke) und evtl. zeitliche Zugangsbeschränkungen (z. B. keine Beschränkungen oder Zugang von Montag bis Freitag, von 7:00 bis 20:00). Die gespeicherten Daten können auch nach im Gebäude 1 vorhandenen Funktionen organisiert sein, z. B. in einem weiteren Datensatz. Zu den im Gebäude 1 vorhandenen Funktionen können beispielsweise gehören: Hausmeister, Gebäudereinigungsdienst, Poststelle, Rezeption/Empfang, Gebäudeverwaltung/Gebäudemanagement.

Die Organisation und Verwaltung der Daten kann z. B. von der Gebäudeverwaltung vorgenommen werden. Die Bewohner 6 können jedoch bestimmen, welche Daten in einem für sie angelegten Bewohnerprofil gespeichert sind. Der Bewohner 6 kann z. B. durch eine oder mehrere Regeln festlegen, wie er kontaktiert werden möchte (z. B. per Telefon oder Textnachricht), wann (z. B. nur tagsüber oder zu Geschäftszeiten, nicht nach 20:00 Uhr), durch wen (z. B. nur von bekannten Personen und Paketzustelldiensten) bzw. durch wen nicht (z. B. unbekannte Personen; diese können an einen Hausmeister verwiesen werden) und/oder bei Abwesenheit (z. B. mit oder ohne Nachricht oder Weiterleitung). Dadurch kann der Bewohner u. a. angeben, welche Besucher 2 ihn wann und wie kontaktieren können.

Je nach Ausgestaltung des Systems, kann am oder in der Nähe des Gebäudes 1 eine optionale Einrichtung 16 (LOC) angeordnet sein, die zur Standortverifizierung dient. Eine solche Einrichtung 16 kann beispielsweise ein Bakensender (auch als Beacon bezeichnet) mit geringer Reichweite sein, z. B. eine energiearme Bluetooth (BLE)-Vorrichtung mit einer begrenzten Übertragungsreichweite von z. B. 10 bis 30 Metern. Alternativ dazu kann die Einrichtung 16 eine Funkeinrichtung für Nahbereichkommunikation (NFC) umfassen. Darüber hinaus kann die Einrichtung 16 auch Teil eines drahtlosen lokalen Netzwerks (wireless local area network, WLAN) sein. Die Einrichtung 16 sendet beispielsweise eine Kennung der Einrichtung 16, die im Webserver 12 dem Gebäude 1 zugeordnet ist, oder eine Kennung des Gebäudes 1 aus. Das Mobilfunkgerät 4 ist ausgestaltet, die von der Einrichtung 16 gelesene Kennung zum Webserver 12 zu senden.

Wenn am Gebäude 1 keine Einrichtung 16 vorgesehen ist, können vom Mobilfunkgerät 4 abgeleitete Positions- oder Standortinformationen verwendet werden. Ein Mobilfunkgerät, das seinen Standort ermitteln kann, kann so eingestellt sein, dass der ermittelte Standort immer genutzt werden darf oder dass der Benutzer jedes Mal anzufragen ist, ob der Standort verwendet werden darf.

Wenn die Standortverifizierung implementiert ist, erfolgt sie im Wesentlichen zeitgleich mit dem Scannen des optischen Codes 10. D. h. die Prozessoreinrichtung 8 prüft gemäss einem Ausführungsbeispiel, ob in Verbindung mit einem empfangenen Datensignal, das aus dem gelesenen optischen Code 10 hervorgeht, Standortinformation des Mobilfunkgeräts 4 vorhanden ist. Stimmt der Standort des Mobilfunkgeräts 4 mit dem Standort des Gebäudes 1 überein, erkennt die Prozessoreinrichtung 8, dass sich der Besucher 2 am Gebäude 1 befindet.

Mit Hilfe der Einrichtung 16 kann bei Bedarf sichergestellt werden, dass der Besucher 2 tatsächlich am Gebäude 1 anwesend sein muss, wenn eine Kontaktaufnahme mit einem Bewohner 6 gewünscht ist. Die Standort Ansonsten könnte der Besucher 2 beispielsweise ein Foto vom optischen Code 10 machen, sich vom Gebäude 1 entfernen und zu einem späteren Zeitpunkt entfernt vom Gebäude 1 den optischen Code vom Foto scannen, um einen Bewohner 6 zu kontaktieren.

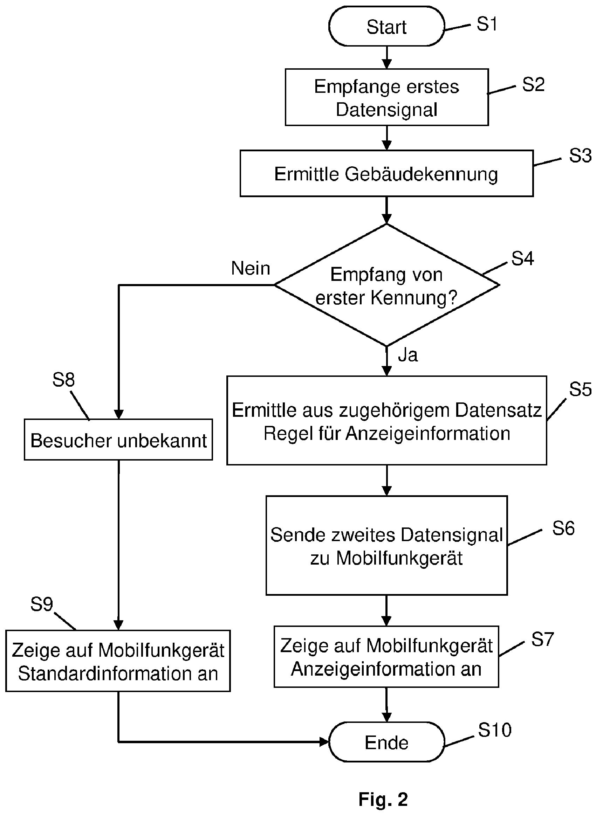

Anhand der in Fig. 1 gezeigten beispielhaften Situation erfolgt im Folgenden eine Beschreibung weiterer Details zur Systemstruktur und zum Durchführen diverser Ausführungsformen des Verfahrens gemäß der hier beschriebenen Technologie. Dabei wird auf das in Fig. 2 beispielhaft gezeigte Ablaufdiagramm eines Ausführungsbeispiels des Verfahrens Bezug genommen; das Verfahren beginnt in einem Schritt S1 und endet in einem Schritt S10. Der Besucher 2, der Zugang zu einem Gebäude 1 möchte, wird zunächst nach einem Eingang 18 suchen, um das Gebäude 1 zu betreten. Typischerweise wird der Besucher 2 das Gebäude 1 nicht betreten können, da beispielsweise eine physische Barriere (z. B. eine Tür) einen nicht berechtigten Zugang in das Gebäude 1 verhindert.

Um sich beispielsweise anzumelden und um Erlaubnis zum Betreten des Gebäudes 1 zu bitten, muss der Besucher 2 den Bewohner 6 kontaktieren, den er besuchen möchte, oder jemand anderen (z. B. einen Dritten), wie etwa eine Empfangsperson, einen Hausmeister oder eine Rezeption, die/der berechtigt ist, dem Besucher 2 Auskunft und evtl. Zugang in das Gebäude 1 zu gewähren. Wenn der Besucher 2 an dem oder in unmittelbarer Nähe des Eingangs 18 ist, nimmt der Besucher 2 den optischen Code 10 mit dem Hinweis wahr, dass dieser zu scannen ist. Dem Hinweis folgend, scannt der Besucher 2 den optischen Code 10 mit seinem Mobilfunkgerät 4, um mit dem gewünschten Bewohner 6 (oder einem Dritten) Kontakt aufzunehmen.

Die Information, die die Scanner-Softwareanwendung aus dem optischen Code 10 ermittelt, wird dann durch das Mobilfunkgerät 4 an den Webserver 12 übertragen, z. B. über ein Mobilfunknetz (3G/4G, UMTS/LTE), mit dem das Mobilfunkgerät 4 verbunden ist. In einem Schritt S2 des Verfahrens empfängt die Prozessoreinrichtung 8 ein erstes Datensignals, das eine Gebäudekennung umfasst, die sich aus dem optischen Code 10 ergibt, wenn er vom Mobilfunkgerät 4 des Besuchers 2 gelesen und zur Prozessoreinrichtung 8 übermittelt wird.

In einem Schritt S3 des Verfahrens ermittelt die Prozessoreinrichtung 8 die Gebäudekennung; sie gibt das Gebäude 1 an, an dem der optische Code 10 angeordnet ist und in dem der Besucher 2 einen Bewohner 6 kontaktieren möchte. Diese gebäudebezogene Information umfasst Angaben, die das Gebäude 1 spezifizieren. In einem Ausführungsbeispiel umfassen die Angaben eine (Internet-)Webadresse (auch als Weblink oder URL (Uniform Resource Locator) bezeichnet), wobei die Webadresse das Zugreifen auf eine Softwareanwendung ermöglicht, die der Webserver 12 ausführt.

Zusätzlich zur gebäudebezogenen Information kann das Mobilfunkgerät 4 auch Information, die sich auf den Besucher 2 bezieht, z. B. die Kennung des Mobilfunkgeräts 4 (Telefonnummer, MAC Adresse) oder einen (Benutzer-)Namen, an den Webserver 12 übertragen. In einem Schritt S4 des Verfahrens ermittelt die Prozessoreinrichtung 8, ob mit dem oder in Verbindung mit dem ersten Datensignal eine dem Besucher 2 zugeordnete erste Kennung empfangen wird, wobei es sich bei Empfang der erste Kennung um einen bekannten Besucher 2 handelt und das Verfahren schreitet entlang des Ja-Zweigs zu einem Schritt S5; andernfalls um einen unbekannten Besucher 2 und das Verfahren schreitet entlang des Nein-Zweigs zu einem Schritt S8.

Handelt es sich bei dem Besucher 2 um einen wiederkehrenden oder regelmässigen Besucher 2 oder um einen Bewohner 2, d. h. um einen bekannten Besucher 2, kann auf seinem Mobilfunkgerät 4 eine Softwareanwendung installiert sein, die eine dem Mobilfunkgerät 4 fest zugeordnete Identifikationsnummer erzeugt. D. h. bei jedem Ausführen der Softwareanwendung erzeugt diese die gleiche Identifikationsnummer. Ist der Besucher 2 im System bekannt, können z. B. die Kennung des Mobilfunkgeräts 4 und/oder die Identifikationsnummer in der Speichereinrichtung 14 des Webservers 12 gespeichert sein. Diese benutzerspezifische Information kann in einem Besucherprofil des Besuchers 2 gespeichert sein oder in einem Bewohnerprofil. D. h. ein Bewohner 6 kann in seinem Bewohnerprofil die benutzerspezifische Information angeben, z. B. den Namen und/oder die Funktion des Besuchers 2, die Kennung des Mobilfunkgeräts 4 und/oder die Identifikationsnummer.

Auf der Grundlage der empfangenen Information kann der Webserver 12 dann ermitteln, an welchem Gebäude 1 der bekannte oder unbekannte Besucher 2 wartet. Abhängig davon veranlasst der Webserver 12 das Durchsuchen der Speichereinrichtung 14 bzw. der Datenbank. Die Prozessoreinrichtung 8 durchsucht die Speichereinrichtung 14 nach einer in den Datensätzen für das durch die Gebäudekennung angegebene Gebäude 1 gespeicherten Mobilfunkgerätekennung, die gleich der ersten Kennung ist. Wenn dies der Fall ist, d. h. das Durchsuchen ist erfolgreich, ermittelt die Prozessoreinrichtung 8 aus dem Datensatz, in dem die erste Kennung gespeichert ist, eine Regel, die die für den Besucher 2 vorbestimmte Anzeigeinformation festlegt (Schritt S5).

In einem Schritt S6 des Verfahrens sendet der Webserver 14 ein zweites Datensignal zum Mobilfunkgerät 4 des Besuchers 2. Das zweite Datensignal umfasst die für den Besucher 2 vorbestimmte Anzeigeinformation. In einem Schritt S7 des Verfahrens veranlasst das Mobilfunkgerät 4 daraufhin, dass die Anzeigeinformation auf einem Bildschirm des Mobilfunkgeräts 4 angezeigt wird. Das Verfahren endet im Schritt S10.

Wird im Schritt S4 ermittelt, dass keine erste Kennung empfangen wird, handelt es sich gemäss Schritt S8 um einen unbekannten Besucher 2. In diesem Fall erzeugt die Prozessoreinrichtung 8 ein drittes Datensignals und sendet dieses zum Mobilfunkgerät 4. Das dritte Datensignal umfasst Standardinformation, d. h. Anzeigeinformation, unabhängig vom Besucher 2 ist. In einem Schritt S9 des Verfahrens wird, veranlasst durch das dritte Datensignal, die Standardinformation auf einem Bildschirm des Mobilfunkgeräts 4 angezeigt. Das Verfahren endet im Schritt S10.

Die angezeigte Information gibt an, welchen bzw. welche Bewohner 6 oder welche Funktion bzw. welche Funktionen der Besucher 2 kontaktieren kann. Die eine oder mehrere Kontaktierungsmöglichkeiten hängen somit auch vom Besucher 2 ab, z. B. ob er und/oder seine Funktion im System bekannt oder unbekannt sind. Der Besucher 2 kann dann die Kontaktierung eines Bewohners 6 bzw. einer Funktion veranlassen, z. B. durch Berühren des auf dem Bildschirm angezeigten Namens des gewünschten Bewohners 6.

Die Informationen bezüglich des gewünschten Bewohners 6 werden dann verwendet, um eine Kommunikationsverbindung zwischen dem Besucher 2 und dem gewünschten Bewohner 6 herzustellen. Beispielhafte Kommunikationsverbindungen sind in Fig. 1 durch Verbindungslinien 28, 30 angedeutet. In einem Ausführungsbeispiel stellt der Webserver 12 die Kommunikationsverbindung zwischen dem Besucher 2 und dem gewünschten Bewohner 6 her, z. B. eine Voice-over-IP(VOIP)-Verbindung, die sowohl eine Audio- als auch eine Videoübertragung bereitstellt. Dies hat den Vorteil, dass die Kontaktinformationen (z. B. Mobiltelefonnummern) der beiden Parteien (d. h. des Besuchers 2 und des Bewohners 6) keiner Partei explizit bereitgestellt werden müssen. Der Bewohner 6 kann beispielsweise den Anruf des Besuchers unter Verwendung seines Kommunikationsgeräts 20 empfangen. Das Kommunikationsgerät 20 kann beispielsweise ein Festnetztelefon, ein Mobiltelefon oder ein Computer sein. Das Kommunikationsgerät 20 und das Mobilfunkgerät 4 können die gleiche App verwenden, um mittels dieser App zu kommunizieren. Eine entsprechende App könnte jedoch auch auf einem Computer oder einem Tablet des Bewohners 6 laufen.

Der Bewohner 6 kann dann über die hergestellte Audioverbindung mit dem Besucher 2 sprechen und möglicherweise den Besucher 2 auch über die optionale Videoverbindung sehen. Anstelle eines Verwendens einer solchen Audio-/Videoverbindung kann der Besucher alternativ (oder zusätzlich) mit dem Bewohner 6 (und umgekehrt) mittels einer durch die App bereitgestellten Sofortnachricht- oder Chat-Funktion oder über einen auf den Kommunikationsgeräten (4, 20) laufenden Webbrowser kommunizieren.

Der Bewohner 6 kann in einem Ausführungsbeispiel lediglich mit dem Besucher 2 kommunizieren. In einem Ausführungsbeispiel kann der Bewohner 6 dem Besucher 2 zudem Zugang in das Gebäude 1 gewähren, indem er Zugangsgewährungsinformationen an ein Zugangskontrollsystem sendet, das konfiguriert ist, um z. B. die Tür oder das Tor am Eingang 18 zu verriegeln oder freizugeben und den Besucher 2 eintreten zu lassen. Die Zugangsgewährungsinformationen können direkt an das Zugangskontrollsystem gesendet werden oder dem Besucher 2 bereitgestellt werden, sodass er die Zugangsgewährungsinformationen dem Zugangskontrollsystem bereitstellen muss. Letzteres hat den Vorteil, dass der Besucher 2 physisch an dem Eingang 18 anwesend sein muss, um die Zugangsgewährungsinformationen dem Zugangskontrollsystem bereitzustellen.

Es gibt mehrere Optionen, dem Besucher 2 die Zugangsgewährungsinformationen von dem Bewohner 6 bereitzustellen, z. B. über das innerhalb des Gebäudes 1 installierte WLAN oder über das Mobilfunknetz und den Webserver 12. Der Besucher 2 kann dann die Zugangsgewährungsinformationen dem Mittel zur Zugangssteuerung direkt bereitstellen, z. B. durch Senden eines Codes über BLE oder NFC oder durch manuelle Eingabe eines Codes. Alternativ könnten die Zugangsgewährungsinformationen von dem Mobilfunkgerät 4 über eine Zwischenvorrichtung, z. B. eine BLE-Vorrichtung, gesendet werden, die zum Beispiel mit dem Mittel zur Zugangssteuerung verkabelt ist.

Für den Fall, dass der Bewohner 6 nicht mit dem Besucher 2 verbunden werden kann oder will, kann er das Empfangen von Anrufen von Besuchern temporär oder permanent an einen Stellvertreter delegieren, wie etwa eine Empfangsperson. Dies kann beispielsweise in einem Büro, wie etwa einer Anwaltskanzlei oder einer Zahnarztpraxis der Fall sein, in der eine Empfangsperson an der Rezeption alle Anrufe von Besuchern entgegennimmt und ihnen Zugang in das Gebäude 1 gewährt.

Informationen bezüglich dessen, ob ein Stellvertreter kontaktiert werden soll, wenn ein Besucher 2 anwesend ist, der einen spezifischen Bewohner 6 sehen möchte, können dem Webserver 12 bereitgestellt werden, der dann eine geeignete Verbindung herstellt. Die Zugangsgewährungsinformationen werden dann durch den Stellvertreter dem Mittel zur Zugangssteuerung direkt bereitgestellt, oder z. B. dem Mobilfunkgerät 4 über den Webserver 12, von dem aus es entweder dem Mittel zur Zugangssteuerung direkt oder alternativ über die Zwischenvorrichtung bereitgestellt wird.

Die hier beschriebenen Technologie schlägt vor, das herkömmliche Verfahren zum Gewähren von Zugang in ein Gebäude, das auf der Grundlage des Verwendens von Ausstattungen in Form von Namensschildern und zugehörigen Klingelknöpfen an dem Eingang zusammen mit einem fest verkabelten Gegensprechanlagensystem zur Kommunikation mit den Bewohnern basiert, mit dem hier beschriebenen Verfahren zu ersetzen, das sich auf die Nutzung eines Mobilfunkgeräts 4 in Verbindung mit optischen Codes 10, die den Besuchern 2 vertraut und jederzeit zur Verfügung steht, stützt. Durch das Übermitteln der auf einen Besucher 2 personalisierten Anzeigeinformation, kann ein konfigurierbares und insbesondere personalisiertes Gebäudekommunikationssystem auf eine effiziente und wirtschaftliche Weise bereitgestellt werden. Ein hohes Maß an Flexibilität und verringerten Kosten wird durch den Einsatz von drahtlosen Technologien anstelle von starren drahtgebundenen Zusammenschaltungen erreicht. Darüber hinaus ist das vorgeschlagene Verfahren gut an den heutigen Trend zu einer zunehmend mobilen Gesellschaft angepasst, in der Büroangestellte und Wohnungsbewohner häufig ihren Arbeitsplatz und ihre Wohnstätte wechseln und ein System erfordern, das schnell aktualisiert werden kann, um diesen Änderungen mit geringem Aufwand zu folgen und aktuell zu bleiben.

Die hier beschriebene Technologie nutzt zudem bekannte Dienste, einschliesslich deren technische Eigenschaften, beispielsweise bzgl. Übertragungsmedium (z. B. Funk, Kabel, Internet), Adressierung (Uniform Resource Locator (URL) und Übertragungsprotokoll (z. B. Internetprotokolle wie z. B. Internet Protokoll (IP), Transmission Control Protocol (TCP), User Datagram Protocol (UDP), Hypertext Transfer Protocol (HTTP), Simple Mail Transfer Protocol (SMTP), File Transfer Protocol (FTP)) sind dem Fachmann bekannt. Bekannte soziale Medien bzw. soziale Netzwerke sind beispielsweise unter folgenden Namen bekannt: Facebook, Instagram, WhatsApp und WeChat.

## Patentansprüche

1. Verfahren zum Betreiben eines Gebäudekommunikationssystems für eine Übermittlung von personalisierter Information an einen Besucher (2) eines Gebäudes (1),
wobei für das Gebäude (1) eine Servereinrichtung (12) vorhanden ist, die eine Prozessoreinrichtung (8) und eine kommunikativ mit der Prozessoreinrichtung (8) verbundene Speichereinrichtung (14) hat, wobei die Speichereinrichtung (14) Daten speichert, die für eine Ermittlung von für Besucher (2) vorbestimmte Anzeigeinformationen vorgesehen sind,
wobei ein dem Gebäude (1) zugeordneter optischer Code (10) von einem Mobilfunkgerät (4) eines Besuchers (2) lesbar ist, während sich der Besucher (2) ausserhalb des Gebäudes (1) oder in einer öffentlichen Zone innerhalb des Gebäudes (1) aufhält, wobei das Verfahren umfasst:
Empfangen eines ersten Datensignals durch die Prozessoreinrichtung (8), wobei das erste Datensignal eine Gebäudekennung umfasst, die sich aus dem optischen Code (10) ergibt, wenn er vom Mobilfunkgerät (4) des Besuchers (2) gelesen und zur Prozessoreinrichtung (8) übermittelt wird, wobei die Gebäudekennung das Gebäude (1) angibt, an dem sich der Besucher (2) befindet, um einen Bewohner (6) zu kontaktieren;
Ermitteln durch die Prozessoreinrichtung (8), ob mit dem oder in Verbindung mit dem ersten Datensignal eine dem Besucher (2) zugeordnete erste Kennung empfangen wird, wobei es sich bei Empfang der ersten Kennung um einen bekannten Besucher (2) handelt, andernfalls um einen unbekannten Besucher (2);
bei Empfang der ersten Kennung, Durchsuchen der Speichereinrichtung (14) durch die Prozessoreinrichtung (8) nach einer für das durch die Gebäudekennung angegebene Gebäude (1) gespeicherten Kennung, die gleich der ersten Kennung ist;
bei erfolgreichem Durchsuchen, Ermitteln durch die Prozessoreinrichtung (8) aus den Daten und mittels der ersten Kennung der für den Besucher (2) vorbestimmten Anzeigeinformation; und
Senden eines zweiten Datensignals von der Servereinrichtung (14) zum Mobilfunkgerät (4), wobei das zweite Datensignal die für den Besucher (2) vorbestimmte Anzeigeinformation umfasst und das Mobilfunkgerät (4) veranlasst, die Anzeigeinformation auf einem Bildschirm des Mobilfunkgeräts (4) anzuzeigen,
wobei bei nicht erfolgreichem Durchsuchen ein drittes Datensignal von der Prozessoreinrichtung (8) erzeugt und zum Mobilfunkgerät (4) gesendet wird, wobei das dritte Datensignal eine vom Besucher (2) unabhängige Anzeigeinformation umfasst und das Mobilfunkgerät (4) veranlasst, die vom Besucher (2) unabhängige Anzeigeinformation auf dem Bildschirm des Mobilfunkgeräts (4) anzuzeigen.

2. Verfahren nach Anspruch 1, ausserdem umfassend Herstellen durch die Prozessoreinrichtung (8) einer Kommunikationsverbindung zwischen dem Mobilfunkgerät (4) des Besuchers (2) und einem Kommunikationsgerät (20) des zu kontaktierenden Bewohners (6), wobei die für den Besucher (2) vorbestimmte Anzeigeinformation einen Namen des Bewohners (2) und/oder dessen Funktion umfasst.

3. Verfahren nach Anspruch 2, ausserdem umfassend Empfangen von Ortsdaten durch die Prozessoreinrichtung (8), wobei die Ortsdaten einen Ort angeben, an dem sich das Mobilfunkgerät (4) befindet.

4. Verfahren nach Anspruch 3, wobei die Ortsdaten vom Mobilfunkgerät (4) ermittelte und übermittelte Standortdaten sind.

5. Verfahren nach Anspruch 3, wobei die Ortsdaten von einer am Gebäude (1) angeordneten Detektionseinrichtung (16) ermittelt und zur Prozessoreinrichtung (8) übermittelt werden.

6. Verfahren nach einem der Ansprüche 3-5, ausserdem umfassend Ermitteln durch die Prozessoreinrichtung (8), ob sich der durch die Ortsdaten angegebene Ort am Gebäude (1) befindet, und, wenn dies nicht der Fall ist, Unterbinden des Herstellens der Kommunikationsverbindung.

7. Verfahren nach Anspruch 6, ausserdem umfassend Senden einer Nachricht durch die Prozessoreinrichtung (8) zum Mobilfunkgerät (4), wobei die Nachricht einen Grund für das Unterbinden des Herstellens der Kommunikationsverbindung angibt.

8. Verfahren nach einem der vorhergehenden Ansprüche, wobei der optische Code (10) einen QR Code oder einen Strichcode umfasst.

9. Verfahren nach einem der vorhergehenden Ansprüche, wobei die erste Kennung eine dem Mobilfunkgerät (4) zugeteilte Telefonnummer, eine MAC Adresse (Media Access Control) des Mobilfunkgeräts (4) und/oder eine Identifikationsnummer, die eine auf dem Mobilfunkgerät (4) installierte Softwareanwendung (App) erzeugt, umfasst, wobei die Identifikationsnummer zur Identifikation des Mobilfunkgeräts (4) und/oder des Besuchers (2) dient.

10. Gebäudekommunikationssystem für ein Gebäude (1), an dem ein optischer Code (10), insbesondere ein QR Code oder ein Strichcode, so angeordnet ist, dass er von einem Mobilfunkgerät (4) eines Besuchers (2) lesbar ist, während sich der Besucher (2) ausserhalb des Gebäudes (1) oder in einer öffentlichen Zone innerhalb des Gebäudes (1) aufhält, umfassend eine Servereinrichtung (12), die eine Prozessoreinrichtung (8) und eine kommunikativ mit der Prozessoreinrichtung (8) verbundene Speichereinrichtung (14) hat, wobei die Speichereinrichtung (14) Daten speichert, die für eine Ermittlung von für Besucher (2) vorbestimmte Anzeigeinformationen vorgesehen sind, wobei die Prozessoreinrichtung (14) ausgestaltet ist,
ein eines ersten Datensignals zu empfangen, wobei das erste Datensignal eine Gebäudekennung umfasst, die sich aus dem optischen Code (10) ergibt, wenn er vom Mobilfunkgerät (4) des Besuchers (2) gelesen und zur Prozessoreinrichtung (8) übermittelt wird, und wobei die Gebäudekennung das Gebäude (1) angibt, an dem sich der Besucher (2) befindet, um einen Bewohner (6) zu kontaktieren;
zu ermitteln, ob mit dem oder in Verbindung mit dem ersten Datensignal eine dem Besucher (2) zugeordnete erste Kennung empfangen wird, wobei es sich bei Empfang der ersten Kennung um einen bekannten Besucher (2) handelt, andernfalls um einen unbekannten Besucher (2);
die Speichereinrichtung (14), bei Empfang der ersten Kennung, nach einer für das durch die Gebäudekennung angegebene Gebäude (1) gespeicherten Kennung zu durchsuchen, die gleich der ersten Kennung ist;
wenn das Durchsuchen erfolgreich ist, aus den Daten und mittels der ersten Kennung die für den Besucher (2) vorbestimmten Anzeigeinformation zu ermitteln;
ein zweites Datensignals von der Servereinrichtung (8) zum Mobilfunkgerät (4) des Besuchers (2) zu senden, wobei das zweite Datensignal die für den Besucher (2) vorbestimmte Anzeigeinformation umfasst und das Mobilfunkgerät (4) veranlasst, die Anzeigeinformation auf einem Bildschirm des Mobilfunkgeräts (4) anzuzeigen; und
wenn das Durchsuchen nicht erfolgreich ist, ein drittes Datensignal zu erzeugen und zum Mobilfunkgerät (4) zu senden, wobei das dritte Datensignal eine vom Besucher (2) unabhängige Anzeigeinformation umfasst und das Mobilfunkgerät (4) veranlasst, die vom Besucher (2) unabhängige Anzeigeinformation auf dem Bildschirm des Mobilfunkgeräts (4) anzuzeigen.

11. Gebäudekommunikationssystem (1) nach Anspruch 10, bei dem die Prozessoreinrichtung (14) ausserdem ausgestaltet ist, eine Kommunikationsverbindung zwischen dem Mobilfunkgerät (4) des Besuchers (2) und einem Kommunikationsgerät (20) des zu kontaktierenden Bewohners (6) herzustellen, wobei die für den Besucher (2) vorbestimmte Anzeigeinformation einen Namen des Bewohners (2) und/oder dessen Funktion umfasst.

12. Gebäudekommunikationssystem (1) nach Anspruch 10 oder 11, bei dem die Prozessoreinrichtung (14) ausserdem ausgestaltet ist, Ortsdaten zu empfangen, wobei die Ortsdaten einen Ort angeben, an dem sich das Mobilfunkgerät (4) befindet.

13. Gebäudekommunikationssystem (1) nach Anspruch 12, bei dem die Prozessoreinrichtung (14) ausserdem ausgestaltet ist, zu ermitteln, ob sich der durch die Ortsdaten angegebene Ort am Gebäude (1) befindet, und, wenn dies nicht der Fall ist, das Herstellen der Kommunikationsverbindung zu unterbinden.

14. System nach einem der Ansprüche 10-13, wobei der optische Code (10) mit einer Markierung versehen ist, die mit dem Tastsinn wahrnehmbar ist, wobei die Markierung insbesondere eine Braille Markierung umfasst.

## Claims

1. Method for operating a building communications system for transmitting personalized information to a visitor (2) of a building (1),
wherein a server device (12) is provided for the building (1), which server device has a processor device (8) and a storage device (14) communicatively connected to the processor device (8), wherein the storage device (14) stores data which are provided for determining display information that is predetermined for visitors (2),
wherein an optical code (10) assigned to the building (1) can be read by a mobile device (4) of a visitor (2) while the visitor (2) is outside the building (1) or in a public zone within the building (1), wherein the method comprises:
receiving a first data signal by means of the processor device (8), wherein the first data signal comprises a building identifier which results from the optical code (10) when it is read by the mobile device (4) of the visitor (2) and conveyed to the processor device (8), wherein the building identifier indicates the building (1) at which the visitor (2) is located in order to contact a resident (6);
determining, by means of the processor device (8), whether a first identifier associated with the visitor (2) is received with or in connection with the first data signal, wherein, if the first identifier is received, the visitor is a known visitor (2), and otherwise the visitor is an unknown visitor (2);
if the first identifier is received, searching, by means of the processor device (8), the storage device (14) for an identifier stored for the building (1) identified by the building identifier that is identical to the first identifier;
if the search is successful, determining, by means of the processor device (8), the display information predetermined for the visitor (2) from the data and by means of the first identifier; and
sending a second data signal from the server device (14) to the mobile device (4), wherein the second data signal comprises the display information predetermined for the visitor (2) and causes the mobile device (4) to display the display information on a screen of the mobile device (4),
wherein, if the search is not successful, a third data signal is generated by the processor device (8) and sent to the mobile device (4), wherein the third data signal comprises display information which is independent of the visitor (2) and causes the mobile device (4) to display the display information which is independent of the visitor (2) on the screen of the mobile device (4).

2. Method according to claim 1, further comprising establishment, by means of the processor device (8), of a communications connection between the mobile device (4) of the visitor (2) and a communications device (20) of the resident (6) to be contacted, wherein the display information predetermined for the visitor (2) comprises a name of the resident (2) and/or their function.

3. Method according to claim 2, further comprising receiving location data by means of the processor device (8), wherein the location data indicate a location at which the mobile device (4) is located.

4. Method according to claim 3, wherein the location data are location data determined and conveyed by the mobile device (4).

5. Method according to claim 3, wherein the location data are determined by a detection device (16) arranged on the building (1) and are conveyed to the processor device (8).

6. Method according to any of claims 3-5, further comprising determining, by means of the processor device (8), whether the location indicated by the location data is at the building (1) and, if this is not the case, preventing the establishment of the communications connection.

7. Method according to claim 6, further comprising sending a message, by means of the processor device (8), to the mobile device (4), wherein the message indicates a reason for preventing the establishment of the communications connection.

8. Method according to any of the preceding claims, wherein the optical code (10) comprises a QR code or a barcode.

9. Method according to any of the preceding claims, wherein the first identifier comprises a telephone number assigned to the mobile device (4), a MAC (media access control) address of the mobile device (4), and/or an identification number generated by a software application (app) installed on the mobile device (4), wherein the identification number is used to identify the mobile device (4) and/or the visitor (2).

10. Building communications system for a building (1), on which an optical code (10), in particular a QR code or a barcode, is arranged such that it can be read by a mobile device (4) of a visitor (2) while the visitor (2) is outside the building (1) or in a public zone within the building (1), comprising a server device (12) which has a processor device (8) and a storage device (14) communicatively connected to the processor device (8), wherein the storage device (14) stores data which are intended for determining display information predetermined for visitors (2), wherein the processor device (14) is designed
to receive a first data signal, wherein the first data signal comprises a building identifier which results from the optical code (10) when it is read by the mobile device (4) of the visitor (2) and conveyed to the processor device (8), and wherein the building identifier indicates the building (1) at which the visitor (2) is located in order to contact a resident (6);
to determine whether a first identifier associated with the visitor (2) is received with or in connection with the first data signal, wherein, if the first identifier is received, the visitor is a known visitor (2), and otherwise the visitor is an unknown visitor (2);
if the first identifier is received, to search the storage device (14) for an identifier stored for the building (1) identified by the building identifier that is identical to the first identifier;
if the search is successful, to determine the display information predetermined for the visitor (2) from the data and by means of the first identifier;
to send a second data signal from the server device (8) to the mobile device (4) of the visitor (2), wherein the second data signal comprises the display information predetermined for the visitor (2) and causes the mobile device (4) to display the display information on a screen of the mobile device (4); and,
if the search is not successful, to generate a third data signal and to send it to the mobile device (4), wherein the third data signal comprises display information which is independent of the visitor (2) and causes the mobile device (4) to display the display information which is independent of the visitor (2) on the screen of the mobile device (4).

11. Building communications system (1) according to claim 10, in which the processor device (14) is further configured to establish a communications connection between the mobile device (4) of the visitor (2) and a communications device (20) of the resident (6) to be contacted, wherein the display information predetermined for the visitor (2) comprises a name of the resident (2) and/or their function.

12. Building communications system (1) according to claim 10 or 11, in which the processor device (14) is further configured to receive location data, wherein the location data indicate a location at which the mobile device (4) is located.

13. Building communications system (1) according to claim 12, in which the processor device (14) is further configured to determine whether the location indicated by the location data is at the building (1) and, if this is not the case, to prevent the establishment of the communications connection.

14. System according to any of claims 10-13, wherein the optical code (10) is provided with a marking which can be perceived by touch, wherein the marking in particular comprises a Braille marking.

## Revendications

1. Procédé permettant l'exploitation d'un système de communication de bâtiment pour une transmission d'informations personnalisées à un visiteur (2) d'un bâtiment (1),
dans lequel un dispositif serveur (12) est présent pour le bâtiment (1), lequel dispositif serveur a un dispositif processeur (8) et un dispositif mémoire (14) relié de manière communicative au dispositif processeur (8), dans lequel le dispositif mémoire (14) mémorise des données qui sont prévues pour une détermination d'informations d'affichage prédéfinies pour le visiteur (2),
dans lequel un code optique (10) associé au bâtiment (1) peut être lu par un appareil de radiocommunication mobile (4) d'un visiteur (2) alors que le visiteur (2) se trouve à l'extérieur du bâtiment (1) ou dans une zone publique à l'intérieur du bâtiment (1), dans lequel le procédé comprend :
la réception d'un premier signal de données par le dispositif processeur (8), dans lequel le premier signal de données comprend un identifiant de bâtiment résultant du code optique (10) lorsqu'il est lu par l'appareil de radiocommunication mobile (4) du visiteur (2) et transmis au dispositif processeur (8), dans lequel l'identifiant de bâtiment indique le bâtiment (1) où le visiteur (2) se trouve pour contacter un résident (6) ;
la détermination par le dispositif processeur (8) établissant si un premier identifiant associé au visiteur (2) est reçu avec ou en liaison avec le premier signal de données, dans lequel il s'agit d'un visiteur (2) connu en cas de réception du premier identifiant, et autrement d'un visiteur (2) inconnu ;
à la réception du premier identifiant, la recherche par le dispositif processeur (8) dans le dispositif mémoire (14) d'un identifiant mémorisé pour le bâtiment (1) indiqué par l'identifiant de bâtiment, qui est identique au premier identifiant ;
en cas de réussite de la recherche, la détermination par le dispositif processeur (8) à partir des données et à l'aide du premier identifiant de l'information d'affichage prédéfinie pour le visiteur (2) ; et
l'envoi d'un deuxième signal de données par le dispositif serveur (14) à l'appareil de radiocommunication mobile (4), dans lequel le deuxième signal de données comprend l'information d'affichage prédéfinie pour le visiteur (2) et amène l'appareil de radiocommunication mobile (4) à afficher l'information d'affichage sur un écran de l'appareil de radiocommunication mobile (4),
dans lequel, en cas d'échec de la recherche, un troisième signal de données est généré par le dispositif processeur (8) et envoyé à l'appareil de radiocommunication mobile (4), dans lequel le troisième signal de données comprend une information d'affichage indépendante du visiteur (2) et amène l'appareil de radiocommunication mobile (4) à afficher l'information d'affichage indépendante du visiteur (2) sur l'écran de l'appareil de radiocommunication mobile (4).

2. Procédé selon la revendication 1, comprenant en outre l'établissement par le dispositif processeur (8) d'une liaison de communication entre l'appareil de radiocommunication mobile (4) du visiteur (2) et un appareil de communication (20) du résident (6) à contacter, dans lequel l'information d'affichage prédéfinie pour le visiteur (2) comprend un nom du résident (2) et/ou sa fonction.

3. Procédé selon la revendication 2, comprenant en outre la réception de données d'emplacement par le dispositif processeur (8), dans lequel les données d'emplacement indiquent un emplacement où se trouve l'appareil de radiocommunication mobile (4).

4. Procédé selon la revendication 3, dans lequel les données d'emplacement sont des données de localisation déterminées et transmises par l'appareil de radiocommunication mobile (4).

5. Procédé selon la revendication 3, dans lequel les données d'emplacement sont déterminées par un dispositif de détection (16) disposé sur le bâtiment (1) et sont transmises au dispositif processeur (8).

6. Procédé selon l'une des revendications 3 à 5, comprenant en outre la détermination par le dispositif processeur (8) établissant si l'emplacement indiqué par les données d'emplacement est situé sur le bâtiment (1) et, si ce n'est pas le cas, l'empêchement de l'établissement de la liaison de communication.

7. Procédé selon la revendication 6, comprenant en outre l'envoi d'un message par le dispositif processeur (8) à l'appareil de radiocommunication mobile (4), dans lequel le message indique une raison d'empêcher l'établissement de la liaison de communication.

8. Procédé selon l'une des revendications précédentes, dans lequel le code optique (10) comprend un code QR ou un code à barres.

9. Procédé selon l'une des revendications précédentes, dans lequel le premier identifiant comprend un numéro de téléphone attribué à l'appareil de radiocommunication mobile (4), une adresse MAC (Media Access Control) de l'appareil de radiocommunication mobile (4) et/ou un numéro d'identification généré par une application logicielle (App) installée sur l'appareil de radiocommunication mobile (4), dans lequel le numéro d'identification sert à identifier l'appareil de radiocommunication mobile (4) et/ou le visiteur (2).

10. Système de communication de bâtiment pour un bâtiment (1), sur lequel un code optique (10), en particulier un code QR ou un code à barres, est disposé de manière à pouvoir être lu par un appareil de radiocommunication mobile (4) d'un visiteur (2), alors que le visiteur (2) se trouve à l'extérieur du bâtiment (1) ou dans une zone publique à l'intérieur du bâtiment (1), comprenant un dispositif serveur (12) qui a un dispositif processeur (8) et un dispositif mémoire (14) relié de manière communicative au dispositif processeur (8), dans lequel le dispositif mémoire (14) mémorise des données qui sont prévues pour une détermination d'informations d'affichage prédéfinies pour le visiteur (2), dans lequel le dispositif processeur (14) est configuré,
pour recevoir un d'un premier signal de données, dans lequel le premier signal de données comprend un identifiant de bâtiment résultant du code optique (10) lorsqu'il est lu par l'appareil de radiocommunication mobile (4) du visiteur (2) et transmis au dispositif processeur (8), et dans lequel l'identifiant de bâtiment indique le bâtiment (1) où le visiteur (2) se trouve pour contacter un résident (6) ;
pour déterminer si un premier identifiant associé au visiteur (2) est reçu avec ou en liaison avec le premier signal de données, dans lequel il s'agit d'un visiteur (2) connu en cas de réception du premier identifiant, et autrement d'un visiteur (2) inconnu ; pour rechercher dans le dispositif mémoire (14), à la réception du premier identifiant, un identifiant mémorisé pour le bâtiment (1) indiqué par l'identifiant de bâtiment, qui est identique au premier identifiant ;
en cas de réussite de la recherche, pour déterminer à partir des données et à l'aide du premier identifiant l'information d'affichage prédéfinie pour le visiteur (2) ;
pour envoyer un deuxième signal de données du dispositif serveur (8) à l'appareil de radiocommunication mobile (4) du visiteur (2), dans lequel le deuxième signal de données comprend l'information d'affichage prédéfinie pour le visiteur (2) et amène l'appareil de radiocommunication mobile (4) à afficher l'information d'affichage sur un écran de l'appareil de radiocommunication mobile (4) ; et
en cas d'échec de la recherche, pour générer un troisième signal de données et l'envoyer à l'appareil de radiocommunication mobile (4), dans lequel le troisième signal de données comprend une information d'affichage indépendante du visiteur (2) et amène l'appareil de radiocommunication mobile (4) à afficher l'information d'affichage indépendante du visiteur (2) sur l'écran de l'appareil de radiocommunication mobile (4).

11. Système de communication de bâtiment (1) selon la revendication 10, dans lequel le dispositif processeur (14) est en outre configuré pour établir une liaison de communication entre l'appareil de radiocommunication mobile (4) du visiteur (2) et un appareil de communication (20) de résident (6) à contacter, dans lequel l'information d'affichage prédéfinie pour le visiteur (2) comprend un nom du résident (2) et/ou sa fonction.

12. Système de communication de bâtiment (1) selon la revendication 10 ou 11, dans lequel le dispositif processeur (14) est en outre configuré pour recevoir des données d'emplacement, dans lequel les données d'emplacement indiquent un emplacement où se trouve l'appareil de radiocommunication mobile (4).

13. Système de communication de bâtiment (1) selon la revendication 12, dans lequel le dispositif processeur (14) est en outre configuré pour déterminer si l'emplacement indiqué par les données d'emplacement se trouve sur le bâtiment (1) et, si ce n'est pas le cas, pour empêcher l'établissement de la liaison de communication.

14. Système selon l'une des revendications 10 à 13, dans lequel le code optique (10) est pourvu d'un marquage perceptible par le sens du toucher, dans lequel le marquage comprend en particulier un marquage en braille.
